## Europäisches Patentamt

## European Patent Office

## Office européen des brevets

(19)

(11) Veröffentlichungsnummer: **0 149 865**
**B1**

(12) # EUROPÄISCHE PATENTSCHRIFT

(45) Veröffentlichungstag der Patentschrift:
**12.08.87**

(21) Anmeldenummer: **84201813.7**

(22) Anmeldetag: **06.12.84**

(51) Int. Cl.⁴: **C 22 B 1/00,** F 27 D 17/00,
C 01 B 17/52

(54) **Verfahren zum Trocknen von sulfidischen Erzen durch direkten Kontakt mit heissen Trocknungsgasen.**

(30) Priorität: **23.12.83 DE 3346878**

(43) Veröffentlichungstag der Anmeldung:
**31.07.85 Patentblatt 85/31**

(45) Bekanntmachung des Hinweises auf die Patenterteilung:
**12.08.87 Patentblatt 87/33**

(84) Benannte Vertragsstaaten:
**BE DE IT SE**

(56) Entgegenhaltungen:
**DE-B-1 068 678
FR-A-1 102 996
US-A-2 242 763
US-A-3 169 853
US-A-4 077 841**

**METALL, Band 37, Nr. 4, April 1983, Seite 299, Berlin,
DE; "We've re-defined copper smelting with our
new CONTOP process"**

(73) Patentinhaber: **METALLGESELLSCHAFT AG,
Reuterweg 14 Postfach 3724, D-6000 Frankfurt/M.1
(DE)**

(72) Erfinder: **Dörr, Karl-Heinz, Am Gonsenheimer
Spiess 6, D-6500 Mainz (DE)**
Erfinder: **Sander, Ulrich, Dr., Taunusstrasse 116,
D-6382 Friedrichsdorf (DE)**
Erfinder: **Schulte, Alfons, De-Bary-Strasse 8,
D-6000 Frankfurt am Main (DE)**
Erfinder: **Traulsen, Heinrich, Dr., Sachsenhausener
Strasse 23, D-6231 Schwalbach (DE)**

(74) Vertreter: **Rieger, Harald, Dr., Reuterweg 14,
D-6000 Frankfurt am Main (DE)**

**Beschreibung**

Die Erfindung betrifft ein Verfahren zum Trocknen von sulfidischen Erzen durch direkten Kontakt mit heißen Trocknungsgasen, wobei die sulfidischen Erze unter Abgabe von $SO_2$-haltigen Gasen verarbeitet werden, aus den $SO_2$-haltigen Gasen in einer Kontaktanlage Schwefelsäure gewonnen wird, und die Trocknungsgase mit überschüssiger Wärme aus der Kontaktanlage aufgeheizt werden.

Sulfidische Erze oder Erzkonzentrate - wie Cu-, Ni-, Pb-, Zn-, Fe-Erze - und gegebenenfalls Zuschlagstoffe - wie Sand, Kalk und Metallkonzentrate aus Schlacken - müssen in manchen Fällen vor der metallurgischen Verarbeitung getrocknet werden. Die metallurgische Verarbeitung erfolgt entweder nach einer Röstung oder die Röstung erfolgt gleichzeitig mit der Verarbeitung. Die dabei anfallenden $SO_2$-haltigen Gase werden in Kontaktanlagen zu Schwefelsäure verarbeitet. Insbesondere bei Verfahren, bei denen Röstung und Verarbeitung gleichzeitig erfolgen - wie z. B. bei Schwebeschmelzverfahren - muß die Trocknung auf sehr niedrige Wassergehalte erfolgen, um ein günstiges Zündverhalten der Erze zu gewährleisten. Andererseits muß bei der Trocknung das Zündverhalten der Erze in der Weise berücksichtigt werden, daß dort keine Zündung erfolgt. Dies wird durch geeignete Wahl der Eintrittstemperatur der Trocknungsgase unter Berücksichtigung des Sauerstoffgehaltes der Gase und der Gas-Feststoff-Führung sichergestellt. Die Trocknung wird im allgemeinen mit heißen Rauchgasen, die durch Verbrennung von fossilen Brennstoffen hergestellt werden, durchgeführt. Da zur Wasserverdampfung eine erhebliche Wärmemenge erforderlich ist, wird eine erhebliche Menge an Primärenergie benötigt.

Aus "Metall", Jahrgang 37, Nr. 4, April 1983, Seite 299 ist es auch bekannt, für die Trocknung von Cu-Erzen heiße Luft einzusetzen, die durch Verwendung von überschüssiger Wärme aus der Kontaktanlage aufgeheizt wird. Dadurch wird eine entsprechende Menge an Primarenergie eingespart. Diese eingesparte Menge an Primärenergie muß aber durch überschüssige Hochtemperatur-Wärme aus dem Kontaktsystem ersetzt werden, die bei der Verarbeitung von hochprozentigen, $SO_2$-haltigen Gasen anfällt und zur Produktion von Hochdruckdampf verwendet werden könnte.

Der Erfindung liegt die Aufgabe zugrunde, den Einsatz von hochwertiger Wärme beim Trocknen möglichst niedrigzuhalten.

Die Lösung der Aufgabe erfolgt erfindungsgemäß dadurch, daß heiße, trockene Endgase der Kontaktanlage als Trocknungsgase eingesetzt werden.

Unter "Endgas" werden die in der Kontaktanlage nach der letzten Kontakthorde aus dem $SO_3$-Absorber austretenden, von $SO_2$ und $SO_3$ weitgehend befreiten, trockenen Abgase verstanden. Sie fallen im allgemeinen mit einer Temperatur von 60 bis 80°C an. Bei Anwendung des Prinzips der Heißabsorption kann ihre Temperatur bis über 140°C steigen. Sie haben nur einen relativ niedrigen Restsauerstoffgehalt. Das Endgas wird mit überschüssiger Wärme aus der Kontaktanlage im indirekten Wärmeaustausch aufgeheizt.

Eine vorzugsweise Ausgestaltung besteht darin, daß das Volumen des in die Trocknung eingesetzten Endgases der spezi-fischen Gasbelastbarkeit des Trocknerapparates entspricht, das eingesetzte Endgas mit überschüssiger Wärme aus der Kontaktanlage auf eine Temperatur aufgeheizt wird, mit welcher die für die Wasserverdampfung erforderliche Wärmemenge in die Trocknung eingebracht wird, und bei der gleichzeitig eine Austrittstemperatur der feuchten Trocknungsgase aus der Trocknung eingehalten wird, die gerade so weit oberhalb des Taupunktes der feuchten Trocknungsgase liegt, daß keine Kondensation in den nachgeschalteten Apparaten erfolgt. Unter der "spezifischen Gasbelastbarkeit" der Trocknerapparate ist zu werstehen das für die Auslegung des jeweiligen Trocknertys pro Gasdurchtritts-Querschnitts-Fläche zulässige Gasvolumen pro Zeiteinheit, unter gleichzeitiger Berücksichtigung des zulässigen Anteils an mitgeführtem Feststoff im austretenden Gasstrom und unter gleichzeitiger Berücksichtigung der für den Gastransport zuzuführenden Energie. Der Taupunkt in dem feuchten, aus der Trocknung austretenden Gas darf auch in den nachgeschalteten Apparaten, wie z. B. den Staubabscheidern, nicht unterschritten werden. Andererseits soll die Austrittstemperatur möglichst niedriggehalten werden, da dadurch die Wärmeverluste durch das austretende Gas und den austretenden Feststoff geringgehalten werden. Unter "überschüssiger Wärme aus der Kontaktanlage" ist die Wärme zu verstehen, die nicht für die Aufheizung $SO_2$-haltiger Gase zur Aufrechterhaltung autothermer Betriebsbedingungen in der Kontaktanlage benötigt wird und andererseits aus dem Kontaktsystem abgeführt werden muß. Die Menge der anfallenden, überschüssigen Wärme ist abhängig von der $SO_2$-Konzentration und Kontaktgasmenge. Bei höheren Schwefelgehalten des Erzes kann die überschüssige Wärme, die in der im Stoffverbund gekoppelten Kontaktanlage anfällt, selbst bei relativ niedrigen $SO_2$-Konzentrationen von z. B. 8 bis 10 Vol.-% $SO_2$ ausreichen für die vollständige Trocknung des vorlaufenden Erzes. Je höher die $SO_2$-Konzentration der Kontaktgase ist, um so mehr über schussige Wärme steht zur Verfügung. Die überschüssige Wärme kann mit einer Temperatur zwischen ca. 150 und 700°C aus dem Kontaktsystem abgeführt werden und ist nach unten im wesentlichen durch den Taupunkt der $SO_3$-haltigen Gase beschränkt. Durch die Verwendung einer relativ großen trockenen Gasmenge für die Trocknung mit einer Temperatur, die beträchtlich unter der im Hinblick auf das Zündverhalten der Erze maximal möglichen Temperatur liegt, ist eine wesentlich bessere Wärmeausnutzung möglich.

Eine Ausgestaltung besteht darin, daß das in die Trocknung eingesetzte Endgas mit überschüssiger Wärme aus der Kontaktanlage vorgeheizt wird und anschließend durch indirekte Beheizung auf die erforderliche Eintrittstemperatur in die Trocknung aufgeheizt wird. Es ist jedoch ein zusätzlicher Wärmeaustauscher erforderlich. Diese Arbeitsweise wird dann angewendet, wenn die überschüssige Wärme aus der Kontaktanlage für die Trocknung nicht ausreicht. Durch die indirekte Beheizung wird der Vorteil der vollkommen trockenen Endgase optimal aufrechtgehalten.

Eine Ausgestaltung besteht darin, daß das in die Trocknung eingesetzte Endgas mit überschüssiger Wärme aus der Kontaktanlage vorgeheizt wird, und anschließend durch direkte Zumischung von heißen Rauchgasen auf die Eintrittstemperatur in die Trocknung gebracht wird, das Volumen des in die Trocknung eingesetzten Mischgases der spezifischen Gasbelastbarkeit des Trockenapparates entspricht, und die Eintrittstemperatur so eingestellt wird, daß die für die Was- serverdampfung erforderliche Wärmemenge in die Trocknung eingebracht wird und bei der gleichzeitig eine Austrittstemperatur der feuchten Trocknungsgase aus der Trocknung eingehalten wird, die genügend oberhalb des Taupunktes der feuchten Trocknungsgase liegt. Auch hier werden die vorstehend beschriebenen Bedingungen entsprechend eingehalten. Die direkte Zumischung der heißen Rauch- gase erfolgt mit maximaler Temperatur, da dadurch die Menge an zugemischten Rauchgasen geringergehalten werden kann und damit auch die Menge an eingebrachtem Wasser entsprechend niedrig ist. Rauchgase entstehen durch Verbrennung von fossilen Brennstoffen und sind unvermeidlich mit Wasser vorbelastet. Die trockenen Endgase aus der Kontaktanlage werden in die Brennkammer zur Erzeugung der Rauchgase anstelle von ungetrockneter Sekundärluft eingeleitet. Diese Arbeitsweise wird angewendet, wenn die überschüssige Wärme aus der Kontaktanlage für die Trocknung der Erze nicht ausreicht. Sie erlaubt weitgehend die Vorteile der Trocknung mit trockenen Endgasen aufrechtzuhalten.

Eine vorzugsweise Ausgestaltung besteht darin, daß die Austrittstemperatur der feuchten Trocknungsgase aus der Trocknung 30 bis 70°C über dem Taupunkt des feuchten Austrittsgases liegt. Dadurch wird die mit den Trocknungsgasen eingebrachte Wärme weitgehend ausgenutzt und eine Unterschreitung des Taupunktes auch in den nachgeschalteten Apparaten zur Staubabtrennung mit Sicherheit vermieden.

Für die Trocknung werden bevorzugt solche Apparate verwendet, die sich für eine hohe spezifische Gasbelastung vorteilhaft eignen und mit einer möglichst geringen Temperaturdifferenz zwischen Gaseintritts- und Gasaustrittstemperatur betrieben werden können, z. B. Schwebetrockner, Wirbelbett-Trockner und Drehtrommel-Trockner.

Die Erfindung wird anhand von Figuren und Beispielen näher erläutert.

Figur 1 ist ein Fließschema einer Verhüttung von Cu-Erzkonzentrat mit integrierter Schwefelsäureerzeugung, bei dem das Konzentrat in einem Drehtrommel-Trockner getrocknet wird.

Figur 2 ist ein Fließschema mit einer Wirbelbett-Trocknungsanlage.

Figur 3 ist ein Fließschema mit einer Kombination von Drehtrommel- und Schwebetrockner.

Das Gemisch aus Erzkonzentrat und Zuschlagstoffen wird über eine Beschickungsvorrichtung 1 in den Trockner 2, 2a, 2b, 2c chargiert. Heißes Endgas wird über Leitung 3 in den Trockner geleitet. Das mit Wasser beladene Abgas aus dem Trockner wird über Leitung 4 in eine Gasreinigung 5 und von dort über Leitung 6 in einen Kamin geleitet. Das getrocknete Gemisch der Feststoffe wird über Leitung 7 ausgetragen und mit dem in der Gasreinigung 5 abgeschiedenen Feststoff 7a zusammen über Leitung 8 in die Cu-Hütte 9 transportiert. Die Verhüttung erfolgt im Schwebeschmelzofen mit anschließendem Konverter unter Verwendung von technischem Sauerstoff. Die dabei erzeugten hochprozentigen, $SO_2$-haltigen Gase werden über Leitung 10 in die Gasreinigung 11 geführt. Die gereinigten Gase werden nach Zumischung von Luft zur Einstellüng des erforderlichen $O_2/SO_2$-Verhältnisses über Leitung 12 in die Schwefelsäure-Kontaktanlage 13 geführt. Das Endgas tritt über Leitung 14 aus der Kontaktanlage 13 aus. Ein Teilstrom des Endgases wird über Leitung 15 zur Aufheizung in die Kontaktanlage 13 zurückgeführt. Das aufgeheizte Endgas wird über Leitung 3 in den Trockner 2 geleitet. Wenn die überschüssige Wärme in der Kontaktanlage 13 nicht ausreicht, um den Teilstrom des Endgases auf die zur Trocknung erforderliche Eintrittstempe- ratur zu bringen, wird über Leitung 16 Heizöl und über Leitung 17 Primärluft zur Erzeugung von Rauchgasen in die Brennkammer 18 geleitet.

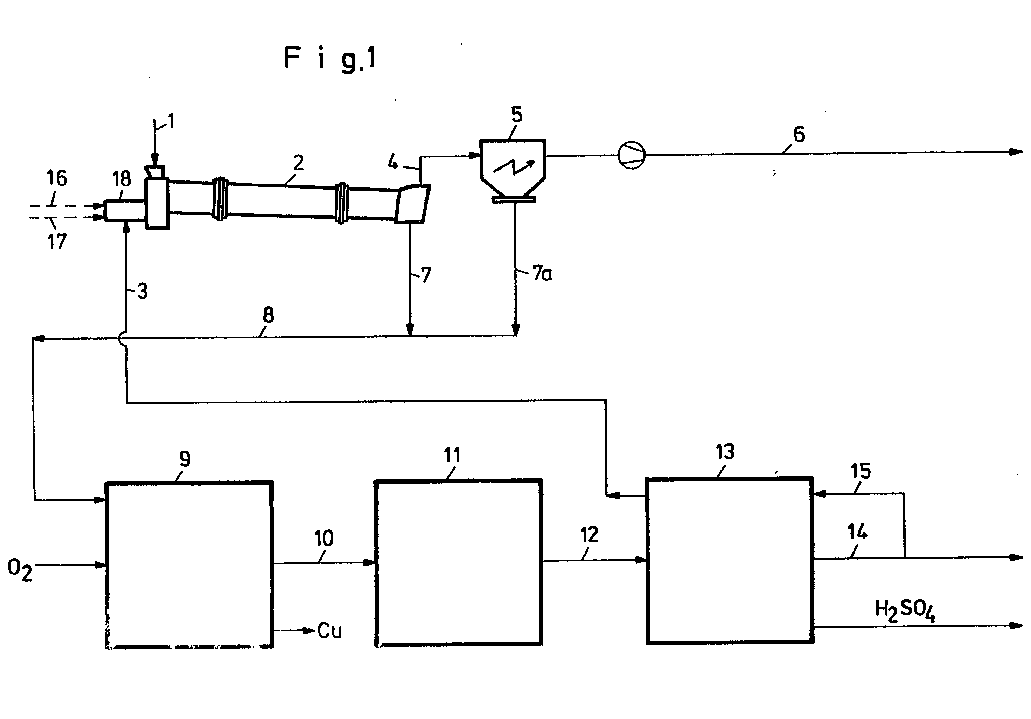

In Figur 1 ist ein Drehtrommel-Trockner 2 dargestellt mit separatem Feststoffaustrag 7 und Gasaustrittsleitung 4.

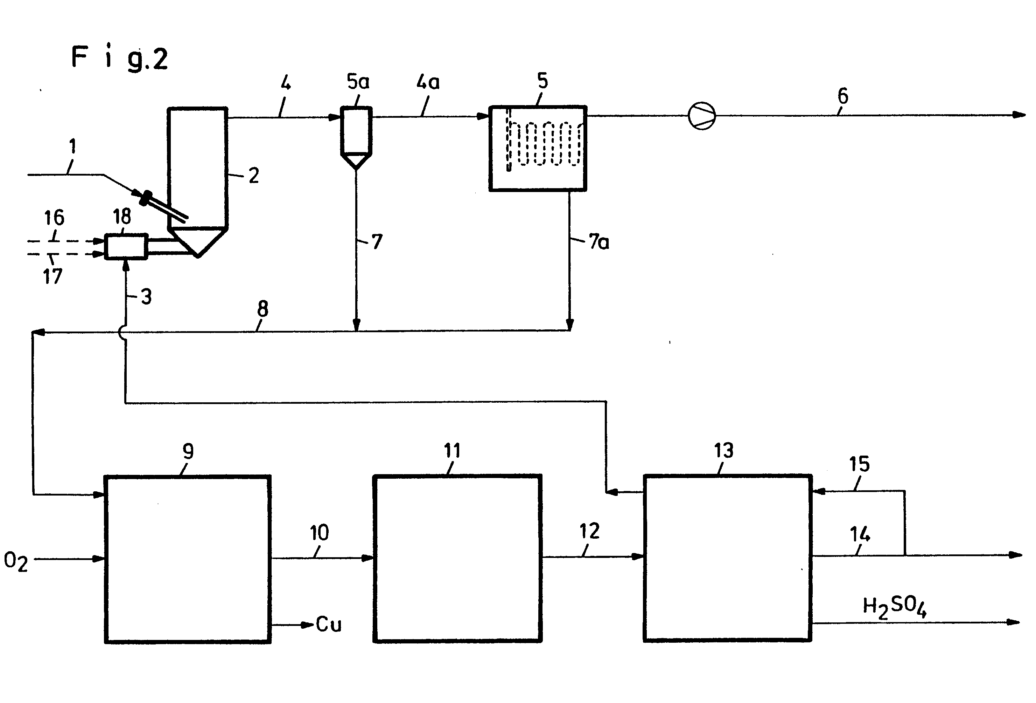

In Figur 2 ist eine Wirbelbett-Trocknung 2a dargestellt. Der getrocknete Feststoff verläßt die Trocknung 2a über die Leitungen 4, 4a zusammen mit dem Austrittsgas und wird von diesem in einer zweistufigen Gasreinigung 5a und 5 abgetrennt. Der abgeschiedene Feststoff wird über die Leitungen 7, 7a in die Leitung 8 geführt.

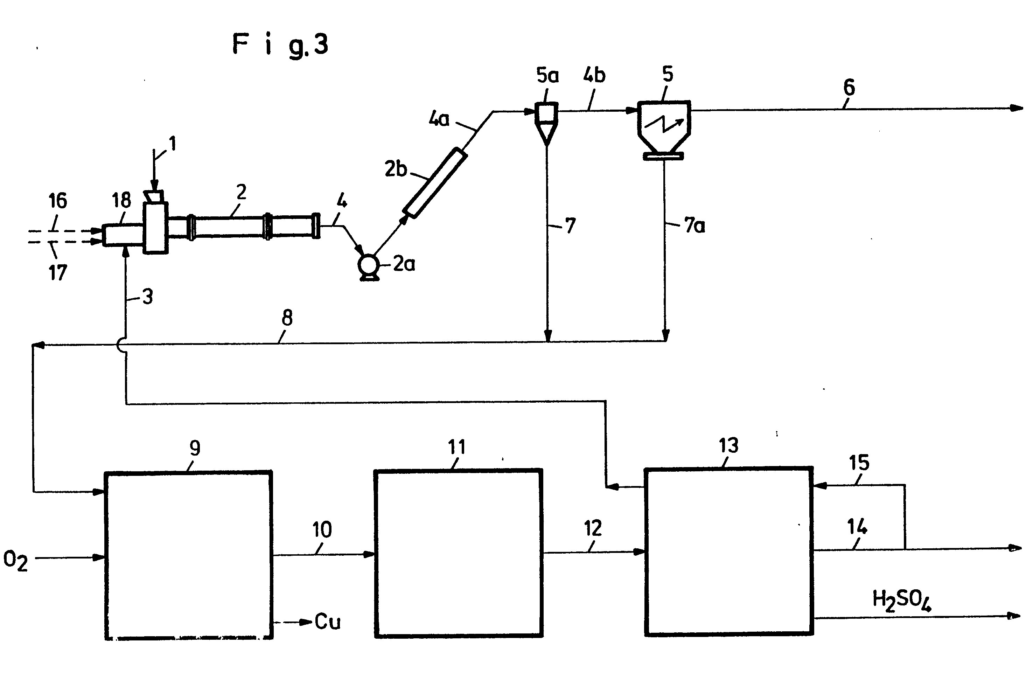

In Figur 3 ist eine kombinierte Drehtrommel- und Schwebetrocknung dargestellt. Aus der kurzen Drehtrommel 2 treten die vorgetrockneten Feststoffe und das Gas in die Käfigmühle 2a. Dort erfolgt unter gleichzeitiger weiterer Trocknung eine Aufmahlung von groben Partikeln. Danach treten Feststoff und Gas in die Schwebetrocknung 2b zur Endtrocknung. Über Leitung 4a treten Feststoff und Gas in einen Zyklonabscheider 5a, in welchem ein großer Teil der Feststoffe abgeschieden und über Leitung 7 in Leitung 8 geleitet wird. Das Gas mit dem restlichen Feststoff wird über Leitung 4b in die elektrostatische Staubabscheidung 5 geleitet.

Für die Beispiele wurde ein Cu-Konzentrat folgender Zusammensetzung verwendet, wobei die Prozentangaben auf trockenes Erz bezogen sind:

Cu-Gehalt    25 %,
Fe      "        32 % und
S       "        34,5 %.

Der Feuchtigkeitsgehalt des Konzentrates betrug 8 %.

Als Zuschlagstoffe wurde Sand mit einem Wassergehalt von 8 % und Schlackenkonzentrat aus Schlacken mit einem Wassergehalt von 12 % verwendet.

Es wurden, bezogen auf Trockenbasis, pro Stunde 51,8 t Cu-Konzentrat, 7,9 t Sand und 2,6 t Schlackenkonzentrat gemischt. Die Aufgabetemperatur betrug 20° C.

Der Trockner wurden mit 67,8 t/h Mischung einschließlich eines Wassergehaltes von 8,1 % beschickt.

Die Schwefelsäureproduktion der im Stoffverbund betriebenen Kontaktanlage betrug 938 t/h $H_2SO_4$, 100 %.

**Beispiele 1 - 3**: (Figur 1)

| | | | Beispiel | | |
|---|---|---|---|---|---|
| | | | 1 | 2 | 3 |
| Pos.- Nr. | Energiebasis | | Rauchgas | Endgas | Endgas + Rauchgas |
| 8 | Feststoffmenge | t/h | 62,5 | 62,5 | 62,5 |
| | $H_2O$-Restfeuchte | % $H_2O$ | 0,3 | 0,3 | 0,3 |
| | Temperatur | °C | 100 | 80 | 90 |
| 18 | Gasmenge | $Nm^3tr/h$ | 38 330 | 39 960 | 40 600 |
| | $H_2O$-Gehalt | $gH_2O/Nm^3tr$ | 39 | 0 | 8 |
| | Gastemperatur | °C | 450 | 408 | 423 |
| 4 | Gasmenge | $Nm^3tr/h$ | 47 260 | 46 860 | 47 430 |
| | $H_2O$-Gehalt | $gH_2O/Nm^3tr$ | 179 | 134 | 140 |
| | Taupunktstemp. | °C | 64 | 53 | 54 |
| | Gastemperatur | °C | 120 | 100 | 110 |
| 16 | Heizölmenge | kg/h | 580 | -- | 170 |
| 17 | Verbrennungsluft | $Nm^3tr/h$ | 38 330 | -- | 5 230 |
| | $H_2O$-Gehalt | $gH_2O/Nm^3tr$ | 20 | -- | 20 |
| | Lufttemperatur | °C | 20 | -- | 20 |

4

| Pos.-Nr. | Energiebasis | | Beispiel | | |
|---|---|---|---|---|---|
| | | | 1 Rauchgas | 2 Endgas | 3 Endgas + Rauchgas |
| 3 | Endgasmenge | $Nm^3 tr/h$ | -- | 39 961 | 40 603 |
| | $H_2O$-Gehalt | $gH_2O/Nm^3 tr$ | -- | 0 | 0 |
| | Endgastemperatur | °C | -- | 450 | 405 |
| 12 | $SO_2$-Konzentration | Vol.-% $SO_2$ | 10,5 | 11,2 | 10,5 |
| | Gasmenge | $Nm^3 tr/h$ | 84 120 | 79 000 | 84 120 |
| 14 | Endgasmenge | $Nm^3 tr/h$ | 75 540 | 61 830 | 75 540 |
| | Endgastemperatur | °C | 70 | 70 | 70 |

Beispiele 4 - 6: (Figur 2)

| Pos.-Nr. | Energiebasis | | Beispiel | | |
|---|---|---|---|---|---|
| | | | 4 Rauchgas | 5 Endgas | 6 Endgas + Rauchgas |
| 8 | Feststoffmenge | t/h | 62,5 | 62,5 | 62,5 |
| | $H_2O$-Restfeuchte | %$H_2O$ | 0,3 | 0,3 | 0,3 |
| | Temperatur | °C | 100 | 95 | 95 |

| Pos.- Nr. | Energiebasis | | Beispiel 1 Rauchgas | 2 Endgas | 3 Endgas + Rauchgas |
|---|---|---|---|---|---|
| 18 | Gasmenge | $Nm^3tr/h$ | 57 140 | 59 310 | 59 000 |
| | $H_2O$-Gehalt | $gH_2O/Nm^3tr$ | 34 | 0 | 2 |
| | Gastemperatur | °C | 320 | 314 | 315 |
| 4 | Gasmenge | $Nm^3tr/h$ | 66 596 | 66 280 | 66 160 |
| | $H_2O$-Gehalt | $gH_2O/Nm^3tr$ | 127 | 90 | 93 |
| | Taupunktstemp. | °C | 52 | 46 | 47 |
| | Gastemperatur | °C | 100 | 95 | 95 |
| 16 | Heizölmenge | kg/h | 610 | -- | 52 |
| 17 | Verbrennungsluft | $Nm^3tr/h$ | 57 625 | -- | 1 610 |
| | $H_2O$-Gehalt | $gH_2O/Nm^3tr$ | 20 | -- | 20 |
| | Lufttemperatur | °C | 20 | -- | 20 |
| 3 | Endgasmenge | $Nm^3tr/h$ | -- | 59 310 | 57 500 |
| | $H_2O$-Gehalt | $gH_2O/Nm^3tr$ | -- | 0 | 0 |
| | Endgastemperatur | °C | -- | 320 | 289 |
| 12 | $SO_2$-Konzentration | Vol.-% $SO_2$ | 10,5 | 11,8 | 10,5 |
| | Gasmenge | $Nm^3tr/h$ | 84 120 | 74 610 | 84 120 |
| 14 | Endgasmenge | $Nm^3tr/h$ | 75 540 | 61 380 | 75 540 |
| | Endgastemperatur | °C | 70 | 70 | 70 |

**Beispiele 7 - 9**: (Figur 3)

| Pos.- Nr. | Energiebasis | | Beispiel | | |
|---|---|---|---|---|---|
| | | | 7 Rauchgas | 8 Endgas | 9 Endgas + Rauchgas |
| 8 | Feststoffmenge | t/h | 62,5 | 62,5 | 62,5 |
| | $H_2O$-Restfeuchte | %$H_2O$ | 0,3 | 0,3 | 0,3 |
| | Temperatur | °C | 75 | 75 | 75 |
| 18 | Gasmenge | $Nm^3tr/h$ | 55 100 | 59 100 | 57 600 |
| | $H_2O$-Gehalt | $gH_2O/Nm^3tr$ | 33 | 0 | 5 |
| | Gastemperatur | °C | 300 | 286 | 300 |
| 4 | Gasmenge | $Nm^3tr/h$ | 64 300 | 66 000 | 65 000 |
| | $H_2O$-Gehalt | $gH_2O/Nm^3tr$ | 130 | 91 | 98 |
| | Taupunktstemp. | °C | 53 | 46 | 48 |
| | Gastemperatur | °C | 80 | 80 | 80 |
| 16 | Heizölmenge | kg/h | 550 | -- | 157 |
| 17 | Verbrennungsluft | $Nm^3tr/h$ | 55 550 | -- | 4 740 |
| | $H_2O$-Gehalt | $gH_2O/Nm^3tr$ | 20 | -- | 20 |
| | Lufttemperatur | °C | 20 | -- | 20 |

0 149 865

| Pos.- Nr. | Energiebasis | | Beispiel | | |
|---|---|---|---|---|---|
| | | | 7 | 8 | 9 |
| | | | Rauchgas | Endgas | Endgas + Rauchgas |
| 3 | Endgasmenge | $Nm^3 tr/h$ | -- | 59 123 | 53 000 |
| | $H_2O$-Gehalt | $gH_2O/Nm^3 tr$ | -- | 0 | 0 |
| | Endgastemperatur | °C | -- | 300 | 247 |
| 12 | $SO_2$-Konzentration | Vol.-% $SO_2$ | 9,0 | 10,8 | 9,0 |
| | Gasmenge | $Nm^3 tr/h$ | 97 552 | 81 926 | 97 552 |
| 14 | Endgasmenge | $Nm^3 tr/h$ | 84 315 | 68 670 | 84 315 |
| | Endgastemperatur | °C | 70 | 70 | 70 |

Die Vorteile der Erfindung bestehen darin, daß der Verbrauch an wertvoller Primärenergie vermieden oder verringert wird, und der Verbrauch an hochwertiger, überschüssiger Wärme aus der Kontaktanlage durch Einsatz der minderwertigen Wärme der Endgase wesentlich verringert wird.

**Patentansprüche**

1. Verfahren zum Trocknen von sulfidischen Erzen durch direkten Kontakt mit heißen Trocknungsgasen, wobei die sulfidischen Erze unter Abgabe von $SO_2$-haltigen Gasen verarbeitet werden, aus den $SO_2$-haltigen Gasen in einer Kontaktanlage Schwefelsäure gewonnen wird, und die Trocknungsgase mit überschüssiger Wärme aus der Kontaktanlage aufgeheizt werden, dadurch gekennzeichnet, daß heiße, trockene Endgase der Kontaktanlage als Trocknungsgase eingesetzt werden.

2. Verfahren nach Anspruch 1, dadurch gekennzeichnet, daß das Volumen des in die Trocknung eingesetzten Endgases der spezifischen Gasbelastbarkeit des Trocknerapparates entspricht, das eingesetzte Endgas mit überschüssiger Wärme aus der Kontaktanlage auf eine Temperatur aufgeheizt wird, mit welcher die für die Wasserverdampfung erforderliche Wärmemenge in die Trocknung eingebracht wird, und bei der gleichzeitig eine Austrittstemperatur der feuchten Trocknungsgase aus der Trocknung eingehalten wird, die gerade so weit oberhalb des Taupunktes der feuchten Trocknungsgase liegt, daß keine Kondensation in den nachgeschalteten Apparaten erfolgt.

3. Verfahren nach Anspruch 2, dadurch gekennzeichnet, daß das in die Trochnung eingesetzte Endgas mit überschüssiger Wärme aus der Kontaktanlage vorgeheizt wird und anschließend durch indirekte Beheizung auf die erforderliche Eintrittstemperatur in die Trocknung aufgeheizt wird.

4. Verfahren nach Anspruch 1, dadurch gekennzeichnet, daß das in die Trocknung eingesetzte Endgas mit überschüssiger Wärme aus der Kontaktanlage vorgeheizt wird, und anschließend durch direkte Zumischung von heißen Rauchgasen auf die Eintrittstemperatur in die Trocknung gebracht wird, das Volumen des in die Trocknung eingesetzten Mischgases der spezifischen Gasbelastbarkeit des Trockenapparates entspricht, und die Ein trittstemperatur so eingestellt wird, daß die für die Wasserverdampfung erforderliche Wärmemenge in die Trocknung eingebracht wird und bei der gleichzeitig eine Austrittstemperatur der feuchten Trocknungsgase aus der Trocknung eingehalten wird, die genügend oberhalb des Taupunktes der feuchten Trocknungsgase liegt.

5. Verfahren nach einem der Ansprüche 2 bis 4, <u>dadurch gekennzeichnet</u>, daß die Austrittstemperatur der feuchten Trocknungsgase aus der Trocknung 30 bis 70°C über dem Taupunkt des feuchten Austrittsgases liegt.

## Revendications

1. Procédé de séchage de minerais sulfurés par contact direct avec des gaz de séchage chauds, les minerais sulfurés étant traités avec dégagement de gaz contenant du $SO_2$ à partir desquels on obtient de l'acide sulfurique dans une installation de mise en contact, tandis que les gaz de séchage sont chauffés avec la chaleur excédentaire provenant de l'installation de mise en contact, caractérisé en ce que, comme gaz de séchage, on utilise des gaz finals secs et chauds de l'installation de mise en contact.

2. Procédé selon la revendication 1, caractérisé en ce que le volume du gaz final utilisé pour le séchage correspond à la capacité spécifique de charge en gaz de l'appareil de séchage, tandis que le gaz final utilisé est chauffé, avec la chaleur excédentaire provenant de l'installation de mise en contact, à une température à laquelle la quantité de chaleur requise pour l'évaporation de l'eau est introduite dans le système de séchage, température à laquelle on maintient simultanément une température de sortie des gaz de séchage humides provenant du séchage, température qui est précisément largement supérieure au point de rosée des gaz de séchage humides de telle sorte qu'il n'y ait aucune condensation dans les appareils montés en aval.

3. Procédé selon la revendication 2, caractérisé en ce que le gaz final utilisé lors du séchage est préchauffé avec la chaleur excédentaire provenant de l'installation de mise en contact, après quoi il est chauffé, par chauffage indirect, à la température d'entrée requise dans le système de séchage.

4. Procédé selon la revendication 1, caractérisé en ce que le gaz final utilisé lors du séchage est préchauffé avec la chaleur excédentaire provenant de l'installation de mise en contakt, après quoi, par addition directe de gaz de fumée chauds, il est porté à la température d'entrée dans le système de séchage, le volume du gaz mixte utilisé lors du séchage correspond à la capacité spécifique de charge en gaz de l'appareil de séchage et la température d'entrée est réglée de telle sorte que la quantité de chaleur requise pour l'évaporation de l'eau soit introduite dans le système de séchage, température à laquelle est maintenue simultanément une température de sortie des gaz de séchage humides sortant du système de séchage, cette température étant suffisamment superieure au point de rosée des gaz de séchage humides.

5. Procédé selon une des revendications 2 à 4, caractérisé en ce que la température de sortie des gaz de séchage humides provenant du séchage se situe à 30-70°C au-delà du point de rosée du gaz de sortie humide.

## Claims

1. A process of drying sulfide ores in direct contact with hot drying gases wherein the sulfide ores are processed with production of $SO_2$-containing gases, sulfuric acid is produced from the $SO_2$-containing gases in a contact process plant, and the drying gases are heated up with surplus heat from the contact process plant, characterized in that has dry tail gases from the contact process plant are used as drying gases.

2. A process according to claim 1, characterized in that the tail gases are supplied to the drying equipment at a rate which corresponds to the specific gas flow rating of the drying equipment, the tail gas which is used is heated with surplus heat from the contact process plant to such a temperature that heat in the quantity required for an evaporation of the water is supplied to the drying equipment, and the humid drying gases leaving the drying equipment are at a temperature which is only so much higher than the dew point temperature of the humid drying gases that there will be no condensation in the succeeding epuipment.

3. A process according to claim 2, characterized in that the tail gas supplied to the drying equipment is preheated with surplus heat from the contact process plant and is subsequently indirectly heated to the reguired inlet temperature for the drying equipment.

4. A process according to claim 1, characterized in that the tail gas supplied to the drying equipment is preheated with surplus heat from the contact process plant and is subsequently heated by a direct admixing of hot flue gases to the inlet temperature for the drying equipment, the mixed gases are supplied to the drying equipment at a volumetric rate which corresponds to the specific gas flow rating of the drying equipment, and the inlet temperature is so adjusted that the quantity of heat required for an evaporation of the water is supplied to the drying equipment and the outlet temperature of the humid drying gases leaving the drying equipment is sufficiently higher than the dew point temperature of the drying gases.

5. A process according to any of claims 2 to 4, characterized in that the outlet temperature of the humid drying gases leaving the drying equipment is 30 to 70°C above the dew point temperature of the humid gaseous effluent.

# F i g.1

0 149 865

Fig.2

Fig.3